# EUROPÄISCHE PATENTSCHRIFT

(11) **EP 3 921 523 B1**
(45) Veröffentlichungstag und Bekanntmachung des Hinweises auf die Patenterteilung: **29.10.2025**
(21) Anmeldenummer: 20703191.5
(22) Anmeldetag: 30.01.2020
(51) Int. Cl.: F02C 1/10, G01P 3/44

(54) **EXPANSIONSANLAGE UND ANLAGE ZUR GEWINNUNG ELEKTRISCHER ENERGIE AUS WÄRME**
EXPANSION SYSTEM AND SYSTEM FOR PRODUCING ELECTRICAL ENERGY FROM HEAT
INSTALLATION DE DÉTENTE ET INSTALLATION DE RÉCUPÉRATION D'ÉNERGIE ÉLECTRIQUE À PARTIR DE CHALEUR

(30) Priorität: 05.02.2019 DE 102019102819
(43) Veröffentlichungstag der Anmeldung: 15.12.2021
(73) Patentinhaber: BITZER Kühlmaschinenbau GmbH, 71065 Sindelfingen (DE)
(72) Erfinder: REPENTIN, Franck, 71083 Herrenberg (DE); BLUMHARDT, Marcus, 71277 Rutesheim (DE)
(74) Vertreter: Hoeger, Stellrecht & Partner Patentanwälte mbB
(86) Internationale Anmeldenummer: PCT/EP2020/052314
(87) Internationale Veröffentlichungsnummer: WO 2020/161000

(56) Entgegenhaltungen:
- EP-A1- 2 161 417
- DE-A1- 102013 002 049
- DE-U- 1 770 399
- FR-A1- 2 976 136

## Beschreibung

Die Erfindung betrifft eine Expansionsanlage gemäß Anspruch 1 zur Gewinnung von elektrischer Energie, mittels eines thermodynamischen Kreisprozesses, umfassend eine durch ein expandierendes Arbeitsmedium des thermodynamischen Kreisprozesses betriebene Expansionseinrichtung und einen Generator, der durch die Expansionseinrichtung angetrieben ist.

Bei derartigen Expansionsanlagen besteht das Problem, die Drehzahl des Generators möglichst präzise zu erfassen, da die Frequenz der vom Generator erzeugten Wechselspannung von der Drehzahl des Generators abhängig ist und die Einspeisung von elektrischer Energie in ein Versorgungsnetz nur dann sinnvoll ist, wenn die Frequenz der vom Generator erzeugten Wechselspannung mit der Netzfrequenz des Versorgungsnetzes übereinstimmt.

Diese Aufgabe wird bei einer Expansionsanlage der eingangs beschriebenen Art erfindungsgemäß dadurch gelöst, dass die Expansionsanlage mit einem Drehzahlsensor versehen ist, welcher mit einer sich proportional zu einem Rotor des Generators drehenden Welle der Expansionsanlage gekoppelt ist und welcher als elektrischer Sensorgenerator ausgebildet ist, der ein elektrisches Sensorsignal erzeugt.

Der Vorteil der erfindungsgemäßen Lösung ist darin zu sehen, dass ein Sensorgenerator ein einfaches Bauteil ist, das sich mit jeder proportional zum Rotor des Generators drehenden Welle der Expansionsanlage koppeln lässt, um als Sensorsignal eine elektrische Spannung zu erzeugen, die einen Rückschluss auf die Drehzahl des Rotors des Generators zulässt.

Als elektrisches Sensorsignal kann prinzipiell sowohl ein Strom als auch eine Spannung ausgewertet werden.

Die Auswertung eines Stroms ist jedoch aufwändiger, da dieser über einen Verbraucher fließen muss und damit nicht mehr proportional zu der Drehzahl des Generators ist.

Aus diesem Grund ist es besonders vorteilhaft, wenn als elektrisches Sensorsignal ein Spannungssignal erzeugt wird, das durch eine unmittelbare Spannungsmessung erfasst werden kann und im Wesentlichen proportional zu der Drehzahl des Generators ist.

Eine derartige Spannung kann dabei insbesondere ohne einen signifikant fließenden Strom und somit ohne zusätzlichen Schaltungstechnischen Aufwand erfasst werden.

Besonders vorteilhaft lässt sich die erfindungsgemäße Lösung dann realisieren, wenn der Sensorgenerator in einem Gesamtgehäuse der Expansionsanlage angeordnet und insbesondere in diesem dem Arbeitsmedium und/oder dem Schmiermittel ausgesetzt ist.

Diese Lösung hat den großen Vorteil, dass sich der Sensorgenerator in einfacher Weise in der Expansionsanlage integrieren lässt und außerdem den Vorteil, dass bei der Integration des Sensorgenerators keinerlei Maßnahmen getroffen werden müssen, um diesen vor Schmiermittel und/oder dem Arbeitsmedium des Kreisprozesses zu schützen.

Eine weitere vorteilhafte Lösung sieht vor, dass der Sensorgenerator einen Sensorrotor mit permanenter Magnetisierung aufweist, der mit einem Statorwicklungen aufweisenden Stator zusammenwirkt, wobei bei sich drehendem Sensorrotor an den Statorwicklungen des Stators eine von der Drehzahl des Sensorrotors abhängige Spannung auftritt, welche das Sensorsignal darstellt.

Diese Lösung hat insbesondere den Vorteil, dass durch die permanente Magnetisierung des Sensorrotors die in den Statorwicklungen auftretende Spannung im Wesentlichen proportional, insbesondere proportional, zu der Drehzahl des Sensorrotors ist, so dass das Sensorsignal in einfacher Weise einen Rückschluss auf die Drehzahl des Sensorrotors und somit auch auf die Drehzahl des Rotors des Generators zur Erzeugung der elektrischen Energie zulässt.

Ferner ist es vorteilhaft, wenn der Sensorrotor zur Realisierung der permanenten Magnetisierung ein Seltene Erden umfassendes Magnetmaterial aufweist, da ein derartiges Magnetmaterial die Möglichkeit eröffnet, eine hohe permanente Magnetisierung des Sensorrotors zu gewährleisten.

Besonders vorteilhaft ist es, wenn der Sensorgenerator so ausgelegt ist, dass er bei einer Drehzahl des Generators, die zu einer Frequenz der erzeugten Wechselspannung im Bereich einer Netzfrequenz eines die elektrische Energie aufnehmenden Versorgungsnetzes führt, eine Spannung im Bereich zwischen 30 V und 48 V, vorzugsweise zwischen 40 V und 48 V erzeugt.

Diese Lösung hat den großen Vorteil, dass das Erzeugen einer möglichst hohen Spannung durch den Sensorgenerator in dem für die Auswertung der Drehzahl des Generators zur Erzeugung der elektrischen Energie relevanten Drehzahlbereich die Genauigkeit bei der Erfassung der Drehzahl verbessert, ohne dass elektrische Bauteile verwendet werden müssen, welche für Spannungen über 48 V geeignet sein müssen, so dass der Sensorgenerator und die Auswerteelektronik mit kostengünstigen Bauteilen realisiert werden können.

Hinsichtlich des Einbaus des Sensorrotors des Sensorgenerators sind die unterschiedlichsten Möglichkeiten denkbar.

Beispielsweise wäre es denkbar, den Sensorrotor über Getriebemittel mit einer Welle der Expansionsanlage zu koppeln.

Eine besonders einfache Lösung sieht vor, dass der Sensorrotor des Sensorgenerators direkt mit einem Wellenende drehfest gekoppelt und von diesem getragen ist.

Dies vereinfacht den Einbau des Sensorgenerators erheblich, da keinerlei Lagerung für den Sensorrotor erforderlich ist, sondern die Lagerung des Sensorrotors des Sensorgenerators über das Wellenende erfolgt.

Eine besonders zweckmäßige Lösung sieht vor, dass der Sensorrotor auf einem mit dem Wellenende verbundenen Rotorträger angeordnet ist.

Um den Rotorträger in einfacher Weise montieren zu können, hat es sich als besonders zweckmäßig erwiesen, wenn der Rotorträger mittels einer Zentrierschraube mit dem Wellenende verbunden ist.

Um ferner die Präzision der Zentrierung des Rotorträgers relativ zu dem Wellenende zu verbessern, hat es sich als vorteilhaft erwiesen, wenn der Rotorträger mittels eines Zentrierkonus relativ zu dem Wellenende zentriert ist, da ein derartiger Zentrierkonus die Möglichkeit eröffnet, die Zentrierung des Sensorrotors relativ zum Wellenende zu verbessern und insbesondere ein Gewindespiel auszugleichen.

Ferner hat es sich als vorteilhaft erwiesen, wenn das mit dem Sensorrotor gekoppelte und diesen tragende Wellenende von einem Lager zentriert geführt ist, so dass das Wellenende selbst sich ebenfalls nicht mit nennenswerten Zentrierfehlern bewegt und diese auf den Sensorrotor überträgt.

Hierzu ist es besonders vorteilhaft, wenn das Wellenende von dem dieses zentriert führenden Lager maximal einen Abstand aufweist, welcher einem Durchmesser des Wellenendes entspricht.

Eine möglichst präzise Zentrierung des Sensorrotors relativ zu der Achse um welche sich dieser dreht, ist deshalb von Vorteil, weil damit ein geringer Spalt zwischen Sensorrotor und Stator realisiert werden kann, der wiederum für die Erzeugung eines möglichst genauen Sensorsignals förderlich ist.

Im Zusammenhang mit der bisherigen Beschreibung der Möglichkeiten des Einbaus des Sensorgenerators in die Expansionsanlage wurde lediglich definiert, dass dieser mit einer sich proportional zum Rotor des die elektrische Energie erzeugenden Generators drehen soll.

Eine vorteilhafte Lösung sieht vor, dass der Sensorgenerator in einem Gesamtgehäuse der Expansionsanlage angeordnet ist.

Diese Lösung hat den Vorteil, dass dadurch der Sensorgenerator in einfacher Weise geschützt und dann darüber hinaus auch in unmittelbarer Kopplung zu der diesen antreibenden Welle angeordnet werden kann, so dass keine Wellendurchführung durch das Gesamtgehäuse erforderlich ist.

Innerhalb des Gesamtgehäuses kann der Sensorgenerator dann noch in unterschiedlichen Gehäuseteilen desselben angeordnet sein.

Beispielsweise ist es denkbar, den Sensorgenerator in einem Expandergehäuse anzuordnen.

In diesem Fall ist vorzugsweise vorgesehen, dass der Sensorgenerator mit einer Schraubenwelle gekoppelt ist.

Eine besonders einfache und vorteilhafte Lösung sieht vor, dass der Sensorgenerator in einem Generatorgehäuse angeordnet ist.

Insbesondere ist es von Vorteil, wenn der Sensorgenerator mit einer Generatorwelle des die elektrische Energie erzeugenden Generators gekoppelt ist, so dass dieser unmittelbar die Drehzahl der Generatorwelle erfassen kann.

Eine besonders günstige Lösung sieht vor, dass der Sensorrotor des Sensorgenerators mit einem Wellenende der Generatorwelle gekoppelt ist und von diesem getragen ist.

Hinsichtlich des Einbaus des Stators in der Expansionsanlage wurden bislang keine näheren Angaben gemacht.

So sieht eine vorteilhafte Lösung vor, dass der Stator des Sensorgenerators an einem Fortsatz eines Gesamtgehäuses der Expansionsanlage stationär gehalten ist.

Um den Stator des Sensorgenerators möglichst wartungsfreundlich und gegebenenfalls auch nachrüstfreundlich anzuordnen ist vorzugsweise vorgesehen, dass der Stator des Sensorgenerators an einem Gehäuseelement, insbesondere einem vom Gesamtgehäuse demontierbaren Gehäuseelement, gehalten ist.

Damit lässt sich insbesondere einfach eine Wartung vornehmen und gegebenenfalls auch der Sensorgenerator einfach nachrüsten.

Um das Sensorsignal in einfacher Weise zu einer Steuerung für die Expansionsanlage führen zu können ist vorzugsweise vorgesehen, dass das Gehäuseelement mit einer elektrischen Anschlussdurchführung versehen ist, so dass das Sensorsignal in einfacher Weise aus dem Gesamtgehäuse herausgeführt werden kann.

Das heißt, dass beispielsweise der Stator an einem Fortsatz eines Generatorgehäuses oder an einem Fortsatz eines Expandergehäuses oder eines Lagergehäuses stationär angeordnet sein kann.

Hinsichtlich der Ausbildung der Expansionseinrichtung selbst wurden im Zusammenhang mit der bisherigen Beschreibung der einzelnen Ausführungsformen keine näheren Angaben gemacht.

So sieht eine vorteilhafte Lösung vor, dass die Expansionseinrichtung mindestens eine durch das expandierende Arbeitsmedium angetriebene Expanderschraube aufweist, mittels welcher ein Antrieb des Generators erfolgt.

Darüber hinaus betrifft die Erfindung eine Anlage zur Gewinnung elektrischer Energie aus Wärme, insbesondere aus industrieller Abwärme, umfassend eine in einem thermodynamischen Kreisprozess betriebene Expansionsanlage, die vorteilhafterweise eines oder mehrere der voranstehend beschriebenen Merkmale aufweist.

Um bei der erfindungsgemäßen Anlage den Generator so zu betreiben, dass eine optimale Einspeisung der von diesem erzeugten elektrischen Energie in ein elektrisches Versorgungsnetz erfolgt, ist vorzugsweise eine einen Kreislauf des Kreislaufprozesses sowie einen Netzschalter zum Verbinden des Generators mit einem elektrischen Versorgungsnetz steuernde Steuerung vorgesehen, welche somit in der Lage ist, die Expansionsanlage und somit den Generator so zu betreiben, dass eine optimale Einspeisung der elektrischen Energie in das elektrische Versorgungsnetz erfolgt.

Insbesondere ist die Steuerung so ausgebildet, dass sie die von dem Sensorgenerator erzeugte Spannung erfasst, aus dieser einen Wert für die Drehzahl des Generators ermittelt und den Generator durch Schließen des Netzschalters mit dem elektrischen Versorgungsnetz dann verbindet, wenn die Drehzahl des Generators zu einer Wechselspannung führt, deren Frequenz im Wesentlichen einer Netzfrequenz des elektrischen Versorgungsnetzes entspricht.

Damit ist sichergestellt, dass die Steuerung nur eine Verbindung zwischen dem Generator und dem elektrischen Versorgungsnetz dann herstellt, wenn eine optimale Einspeisung der erzeugten elektrischen Energie in das Versorgungsnetz gewährleistet ist.

Ferner ist vorzugsweise vorgesehen, dass die Steuerung den Kreislauf des Kreisprozesses derart steuert, dass der Generator nach Herstellung der Verbindung mit dem Versorgungsnetz die dem thermodynamischen Kreisprozess zur Verfügung gestellte Wärme mit möglichst hohem Wirkungsgrad in elektrische Energie wandelt und diese in das Versorgungsnetz einspeist.

Darüber hinaus ist aus Sicherheitsgründen vorgesehen, dass die Steuerung die Drehzahl des mit dem Versorgungsnetz gekoppelten Generators überwacht und dann, wenn die Frequenz der erzeugten Wechselspannung von der Netzfrequenz abweicht, in den Kreislauf im Sinne einer Anpassung der Drehzahl des Generators steuernd eingreift.

Eine weitere vorteilhafte Lösung sieht vor, dass die Steuerung die Drehzahl des mit dem Versorgungsnetz gekoppelten Generators überwacht und dann, wenn die Differenz zwischen der Frequenz der vom Generator erzeugten Wechselspannung und der Netzfrequenz des Versorgungsnetzes einen Schwellwert überschreitet, durch Öffnen des Netzschalters den Generator von dem elektrischen Versorgungsnetz trennt, so dass in jedem möglichen Zustand des Kreisprozesses sichergestellt ist, dass keine störenden Einflüsse auf das Versorgungsnetz auftreten.

Eine weitere vorteilhafte Ausführung sieht vor, dass die Steuerung beim Verbinden des Generators mit dem Versorgungsnetz Statorwicklungen des Generators einen Kondensatorsatz parallel schaltet.

Ein derartiger Kondensatorsatz ermöglicht es, eine optimale Leistungsanpassung hinsichtlich der Blind- und Wirkleistung bei der Verbindung zwischen dem Generator und dem Versorgungsnetz zu realisieren.

Insbesondere ist dabei der Kondensatorsatz so ausgebildet, dass dessen Kondensatoren jeweils den Statorwicklungen des Generators parallel geschaltet sind.

Um beim Trennen des Generators den Generator hinsichtlich seiner Drehzahl abzubremsen, sieht eine weitere Vorteilhafte Lösung vor, dass die Steuerung beim Trennen des Generators vom Versorgungsnetz die Parallelschaltung der Statorwicklungen mit dem Kondensatorsatz aufrecht erhält und diesem zusätzlich einen Widerstandssatz parallel schaltet.

Ein derartiger Widerstandsatz ist dabei insbesondere so ausgebildet, dass einzelne Widerstände desselben jeweils den Statorwicklungen und den diesen parallel geschalteten Kondensatoren parallel geschaltet sind, um den vom Generator in Verbindung mit dem Kondensatorsatz erzeugten Strom aufzunehmen und dabei den Generator hinsichtlich seiner Drehzahl abzubremsen.

Um ferner sicherzustellen, dass ein Anlaufen des Generators im Zusammenhang mit einem Anlaufen des Kreislaufs des Kreisprozesses in einfacher Weise und möglichst leicht erfolgt, sieht eine weitere vorteilhafte Ausführungsform der erfindungsgemäßen Lösung vor, dass die Steuerung zum Anlaufen des Generators diesen von dem Kondensatorsatz und dem Widerstandssatz trennt, so dass der Generator seinerseits unabhängig und ohne Beeinträchtigung durch den Generatorsatz und den Widerstandssatz anlaufen kann.

Bei einem weiteren Ausführungsbeispiel einer erfindungsgemäßen Anlage ist vorzugsweise vorgesehen, dass der Generator mittels einer Umrichtereinheit mit dem elektrischen Versorgungsnetz gekoppelt ist.

Eine derartige Umrichtereinheit schafft die Möglichkeit, den Generator so zu betreiben, dass dieser elektrische Energie mit einer Generatorfrequenz erzeugt, die nicht zwingend mit der Netzfrequenz des Versorgungsnetzes übereinstimmen muss, um diese elektrische Energie mit der Netzfrequenz in das Versorgungsnetz einspeisen zu können.

Das heißt, dass insbesondere der Kreisprozess, in welchem die Expansionsanlage angeordnet und betrieben ist, noch optimaler zur Einspeisung von elektrischer Energie in das Versorgungsnetz genutzt werden kann.

Ferner schafft die Umrichtereinheit die Möglichkeit, die Verbindung zwischen dem Generator und dem Versorgungsnetz im Wesentlichen ohne das Auftreten von Spannungsspitzen herzustellen.

Insbesondere ist hierbei vorgesehen, dass die Umrichtereinheit die von dem Generator mit einer Generatorfrequenz erzeugte elektrische Energie in elektrische Energie mit der Netzfrequenz des Versorgungsnetzes umsetzt und in dieses einspeist.

Vorzugsweise ist dabei vorgesehen, dass die Umrichtereinheit die elektrische Energie des Generators dann in elektrische Energie zur Einspeisung in das Versorgungsnetz umsetzt, wenn die Generatorfrequenz der elektrischen Energie in einem Betriebsfrequenzbereich der Umrichtereinheit liegt, der sich von einer Mindestfrequenz bis zu einer Höchstfrequenz erstreckt.

Das heißt, dass bei dieser Lösung die Umrichtereinheit nur dann zum Einsatz kommt, wenn die Generatorfrequenz innerhalb des Betriebsbereichs liegt und somit die Umrichtereinheit die vom Generator erzeugte elektrische Energie nur dann umsetzt, wenn diese in dem Betriebsfrequenzbereich liegt, der so gewählt ist, dass eine sinnvolle und effektive Umsetzung der vom Generator erzeugten elektrischen Energie in die elektrische Energie bei Netzfrequenz möglich ist.

Vorzugsweise liegen dabei die Mindestfrequenz im Bereich von 30 bis 40 Hz und die Höchstfrequenz im Bereich von 60 bis 80 Hz.

Um den Generator stabil betreiben zu können ist vorzugsweise vorgesehen, dass mit der Umrichtereinheit die Generatorfrequenz für den Generator vorgebbar ist, das heißt, dass der Generator bei einer bestimmten Generatorfrequenz gehalten wird, welche einen sinnvollen und effizienten Betrieb der Umrichtereinheit gewährleistet, ohne dass die Gefahr besteht, dass der Generator hinsichtlich seiner Generatorfrequenz instabil betrieben wird und somit die Generatorfrequenz durch Betriebsschwankungen im Kreisprozess variiert.

Besonders günstig ist es ferner, wenn die Generatorfrequenz durch Zusammenwirken der Steuerung mit der Umrichtereinheit an die vom Kreisprozess am Generator freigesetzte Leistung anpassbar ist.

Das heißt, dass mit der Steuerung die Möglichkeit besteht, die Generatorfrequenz bei einem insbesondere im Betriebsfrequenzbereich liegenden und stabilen Wert durch die Steuerung zu halten.

Aus Sicherheitsgründen ist ferner vorgesehen, dass die Steuerung den Generator dann von der Umrichtereinheit abkoppelt, wenn die Generatorfrequenz außerhalb des Betriebsbereichs liegt.

Eine weitere vorteilhafte Lösung sieht vor, dass die Umrichtereinheit einen Gleichstromzwischenkreis und einen durch diesen gespeisten zweiten Umrichter zur Erzeugung der elektrischen Energie bei der Netzfrequenz aufweist.

Dabei könnte prinzipiell der Gleichstromzwischenkreis über eine Gleichrichtereinheit von dem Generator gespeist werden.

Besonders günstig ist es jedoch, wenn die Umrichtereinheit einen mit dem Generator verbindbaren ersten Umrichter zur Speisung des Gleichstromzwischenkreises aufweist, da mit einem derartigen ersten Umrichter die Möglichkeit besteht, einerseits effizient die bei der Generatorfrequenz anfallende elektrische Energie in den Gleichstromzwischenkreis umzusetzen, und andererseits die Möglichkeit besteht, den Generator bei der Generatorfrequenz zu halten, gegebenenfalls unter temporärer Einspeisung von elektrischer Energie in den Generator, um diesen bei einer definierten Generatorfrequenz zu halten.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines Kreisprozesses einer Abwärme nutzenden Anlage mit einer Expansionsanlage,
- Fig. 2: einen Längsschnitt durch ein erstes Ausführungsbeispiel einer erfindungsgemäßen Expansionsanlage;
- Fig. 3: einen Schnitt längs Linie 3-3 durch das erste Ausführungsbeispiel der erfindungsgemäßen Expansionsanlage;
- Fig. 4: eine vergrößerte Schnittdarstellung eines Bereichs A in Fig. 2;
- Fig. 5: einen Schnitt ähnlich Fig. 3 durch ein zweites Ausführungsbeispiel einer erfindungsgemäßen Expansionsanlage;
- Fig. 6: einen Schnitt ähnlich Fig. 3 durch ein drittes Ausführungsbeispiel einer erfindungsgemäßen Expansionsanlage;
- Fig. 7: einen vergrößerten Schnitt ähnlich Fig. 4 durch ein viertes Ausführungsbeispiel einer erfindungsgemäßen Expansionslage;
- Fig. 8: eine vergrößerte Darstellung eines Rotorträgers gemäß dem vierten Ausführungsbeispiel der erfindungsgemäßen Expansionsanlage;
- Fig. 9: ein Ablaufschema, welches eine Inbetriebnahme der in Fig. 1 dargestellten Expansionsanlage im Zusammenhang mit dem Kreisprozess 10, in welchem die Expansionsanlage eingebunden ist, zeigt;

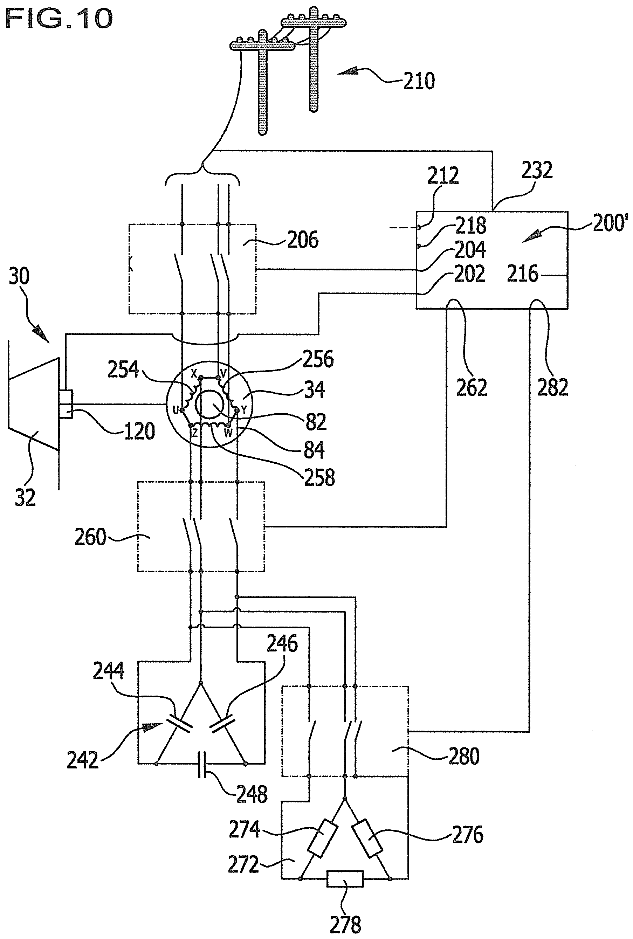

- Fig. 10: eine ausschnittsweise schematische Darstellung eines fünften Ausführungsbeispiels einer erfindungsgemäßen Anlage mit einer Expansionsanlage und
- Fig. 11: eine schematische Darstellung ähnlich Fig. 1 eines sechsten Ausführungsbeispiels einer erfindungsgemäßen Anlage mit einer Expansionsanlage.

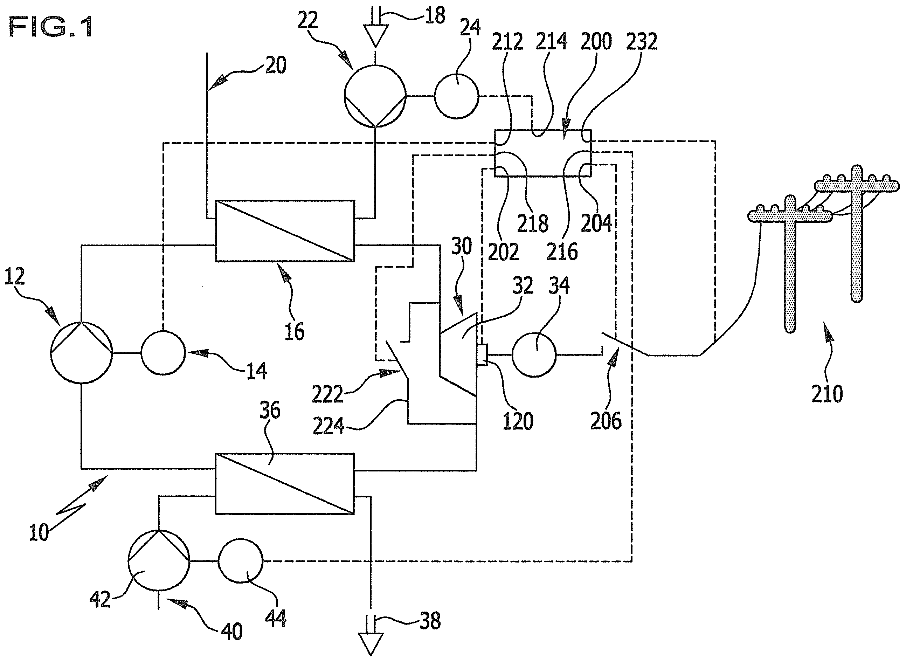

Eine Anlage zur Gewinnung elektrischer Energie aus Wärme, insbesondere zur Gewinnung elektrischer Energie aus Abwärme umfasst einen in Fig. 1 dargestellten Kreisprozess, insbesondere einen mit einem Rankine-Zyklus arbeitenden Kreisprozess, in welchem ein in einem Kreislauf 10 geführtes Arbeitsmedium durch einen Verdichter 12, der durch einen Motor 14 angetrieben ist, verdichtet wird.

In einem nachfolgenden Wärmeübertrager 16 wird das Arbeitsmedium durch Zufuhr von Wärme aus einem Wärmestrom 18 verdampft.

Beispielsweise erfolgt die Zufuhr von Wärme durch den Wärmestrom 18 mittels eines Heißwasserkreislaufs 20, welcher ebenfalls den Wärmeübertrager 16 durchströmt und in welchem eine Heißwasserpumpe 22 zum Umwälzen des Heißwassers in dem Heißwasserkreislauf 20 angeordnet ist, die ihrerseits durch einen Motor 24 angetrieben ist.

Das durch die Zufuhr des Wärmestroms 18 in dem Wärmeübertrager 16 verdampfte Arbeitsmedium wird einer auf den Wärmeübertrager 16 im Kreislauf 10 folgend angeordneten Expansionsanlage 30 zugeführt, welche eine Expansionseinrichtung 32 umfasst, die einen Generator 34 zur Stromerzeugung antreibt.

Nach Durchströmen der Expansionseinrichtung 32 wird das Arbeitsmedium in dem Kreislauf 10 einem Wärmeübertrager 36 zugeführt, in welchem das Arbeitsmedium kondensiert, wobei durch den Wärmeübertrager 36 eine Abfuhr eines Wärmestroms 38 erfolgt.

Hierzu ist insbesondere ein Kaltwasserkreislauf 40 vorgesehen, der ebenfalls den Wärmeübertrager 36 durchsetzt, wobei in dem Kaltwasserkreislauf 40 eine Kaltwasserpumpe 42 angeordnet ist, die durch einen Motor 44 angetrieben ist.

Insbesondere erfolgt durch den Verdichter 12 eine isentrope, vorzugsweise eine ideale isentrope, Verdichtung eines von dem Wärmetauscher 36 erzeugten flüssig gesättigten Kondensats des Arbeitsmediums und in dem Wärmetauscher 16 erfolgt eine im Wesentlichen isobare Verdampfung des unterkühlten Systems bis zum Erreichen des dampfförmig gesättigten Zustandes, in dem dann das Arbeitsmedium der Expansionsanlage 30 zugeführt wird, wobei in der Expansionseinrichtung 32 durch Expansion mechanische Arbeit entsteht, durch welche der Generator 34 angetrieben wird.

In dem Wärmeübertrager 36 erfolgt schließlich eine isobare, insbesondere eine vollständige isobare, Kondensation des Arbeitsmediums durch Abfuhr des Wärmestroms 38, so dass dann wiederum ein flüssig gesättigtes Kondensat dem Verdichter 12 zugeführt werden kann.

Als Arbeitsmedium werden organische Arbeitsmedien, wie beispielsweise R245fa, R1224yd(z), R1336mzz(Z), R1336mzz(E), R1233zd, R1234ze, R1234yf, R134a, R513a, R245fa und Mischungen davon oder ähnliche Medien eingesetzt.

Vorzugsweise dient ein derartiger Kreisprozess zur Ausnutzung industrieller Abwärme, die beispielsweise im Bereich zwischen 85° C und 700° C anfällt, wobei sich diese Abwärme durch den vorstehend beschriebenen Kreisprozess in optimaler Weise in elektrische Energie umwandeln lässt.

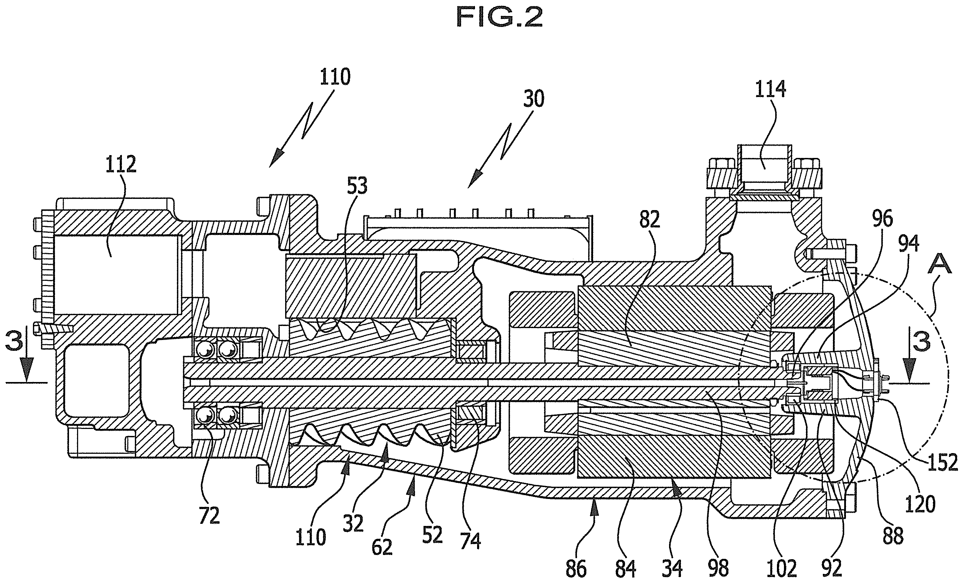

In den Fig. 2 bis 4 ist ein erstes Ausführungsbeispiel einer in dem vorstehend beschriebenen Kreislauf 10 eingesetzten Expansionsanlage 30 dargestellt.

Die Expansionseinrichtung 32 ist beispielsweise als Schraubenexpander ausgeführt, der bei einer Ausführungsform als Einschraubenexpander ausgeführt ist oder der bei der im Ausführungsbeispiel dargestellten Ausführungsform beispielsweise zwei ineinandergreifende Expanderschrauben 52 und 54 aufweist, welche ihrerseits mittels beiderseits über diese überstehenden Schraubenwellen 56 und 58 in einem Expandergehäuse 62 in Schraubenbohrungen 53, 55 angeordnet und um zueinander parallele Drehachsen 64 und 66 drehbar gelagert sind, wobei beispielsweise für die Schraubenwelle 56 zwei Lagersätze 72 und 74 vorgesehen sind und für die Schraubenwelle 58 zwei Lagersätze 76 und 78 vorgesehen sind.

Dabei sind die Lagersätze 72 und 76 beispielsweise hochdruckseitig der Expanderschrauben 52 und 54 angeordnet und die Lagersätze 74 und 78 niederdruckseitig der Expanderschrauben 52, 54 angeordnet.

Die Expansionseinrichtung 32 ist beispielsweise derart mit dem Generator 34 gekoppelt, dass eine der Schraubenwellen, beispielsweise die Schraubenwelle 56, in den Generator 34 geführt ist, und einer Generatorwelle 98 bildet, welche einen Rotor 82 trägt, der in diesem Fall ebenfalls um die Drehachse 64 drehbar gelagert ist.

Ferner ist der Rotor 82 von einem Stator 84 umgeben, der feststehend in einem als Ganzes mit 86 bezeichneten Generatorgehäuse angeordnet ist, wobei dieses Generatorgehäuse 86 vorzugsweise sich unmittelbar an das Expandergehäuse 62 anschließt, beispielsweise sogar einstückig mit diesem verbunden ist.

Das Generatorgehäuse 86 ist vorzugsweise auf einer dem Expandergehäuse 62 gegenüberliegenden Seite durch ein Gehäuseelement 88, beispielsweise ausgebildet als lösbarer Gehäusedeckel, verschlossen.

Zur Verbesserung der Laufeigenschaften des Rotors 82 ist das Gehäuseelement 88 mit einem Lagerträger 92 versehen, welcher sich ausgehend von dem Gehäuseelement 88, beispielsweise als zylindrischer Fortsatz 94, in Richtung eines Wellenendes 96 der insbesondere als einstückige Fortsetzung der Schraubenwelle 56 ausgebildeten Generatorwelle 98 erstreckt und das Wellenende 96 mittels eines Lagers 102 konzentrisch zur Drehachse 64 zentriert lagert, insbesondere zusätzlich zu den Lagersätzen 72 und 74 stützt, um einen möglichst ruhigen und präzisen Lauf des sich um die Drehachse 64 drehenden Rotors 82 zu gewährleisten.

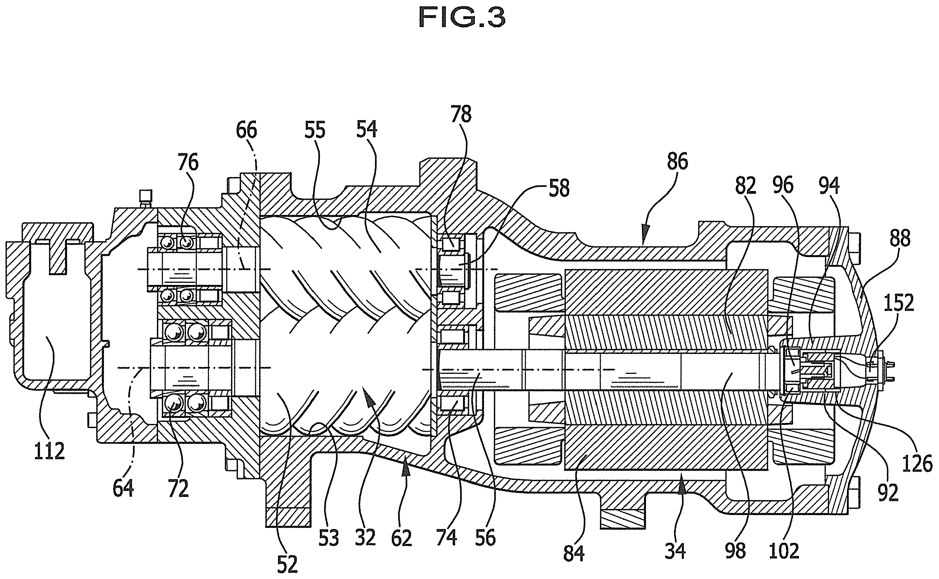

Bei der in den Fig. 2 und 3 exemplarisch dargestellten Expansionseinrichtung 32 tritt das von dem Wärmeübertrager 16 kommende unter Druck stehende erhitzte Arbeitsmedium in einen Einlass 112 eines das Expandergehäuse 62 und das Generatorgehäuse 86 umfassenden Gesamtgehäuses 110 der Expansionsanlage 30 ein, durchströmt dann die Expansionseinrichtung 32, insbesondere die durch die Expanderschrauben 52 und 54 mit dem Expandergehäuse 32 gebildeten Kammern, und tritt dann nach Expansion in das Generatorgehäuse 86 ein, so dass durch das expandierte Arbeitsmedium eine Kühlung des Rotors 82 und des Stators 84 in dem Generatorgehäuse 86 erfolgt, und verlässt das Generatorgehäuse 86 durch einen Auslass 114 (Fig. 2).

Vorzugsweise ist der Auslass 114 auf einer der Expansionseinrichtung 32 gegenüberliegenden Seite des Generators 34 am Generatorgehäuse 86 angeordnet.

Zur präzisen Erfassung der Drehzahl des Generators 34 ist bei dem ersten Ausführungsbeispiel der Expansionsanlage 30 dem Wellenende 96 der Generatorwelle 98 ein Drehzahlsensor 120 zugeordnet, welcher vorzugsweise in dem zylindrischen Fortsatz 94 des Gehäuseelements 88 angeordnet ist und dem Wellenende 96 zugewandt ist, so dass der Drehzahlsensor 120 in der Lage ist, die Drehzahl des Wellenendes 96 zu erfassen.

Vorzugsweise ist dabei der Drehzahlsensor 120 als elektrischer Sensorgenerator 122 ausgebildet, dessen Sensorrotor 124 mit permanenter Magnetisierung, vorzugsweise mit einer Magnetisierung mit hoher Feldstärke, versehen ist, die sich beispielsweise durch Verwendung von Magneten der seltenen Erden, wie insbesondere NdFeB oder SmCo, herstellen lässt, welche eine hohe permanente Feldstärke sicherstellen.

Beispielsweise ist der Sensorrotor 124 mehrpolig, insbesondere vierpolig oder sechspolig, ausgeführt.

Ferner umfasst der Drehzahlsensor 120 einen den Sensorrotor 124 umschließenden Stator 126, der die Statorwicklungen trägt und seinerseits durch ein Zentrierelement 128 koaxial zur Drehachse 64 und drehfest in dem zylindrischen Fortsatz 94 des Generatorgehäuses 86 gehalten ist.

Besonders vorteilhaft ist es bei dem Drehzahlsensor 120, wenn der Sensorrotor 124 direkt mit dem Wellenende 96 gekoppelt und von diesem getragen ist.

Um den Sensorrotor 124 des Sensorgenerators 122 möglichst exakt zentriert zur Drehachse 64 zu führen, liegt das Wellenende 96 möglichst nah an dem dieses zentriert führenden Lager 102, insbesondere in einem Abstand von dem Lager 102 der kleiner ist als ein Durchmesser des Wellenendes 96.

Hierzu ist ein Rotorträger 132 vorgesehen, welcher den Sensorrotor 124 trägt und mittels einer Zentrierschraube 134, die mit einem Gewindeabschnitt 136 in ein endseitiges Gewinde 138 im Wellenende 96 eingreift, relativ zur Generatorwelle 98 zentriert und mit dieser drehfest gekoppelt ist.

Um zusätzlich eine ausreichende Schmierung des Lagers 102 über einen die Generatorwelle 98 durchsetzenden Schmiermittelkanal 142 zu ermöglichen, ist die Zentrierschraube 134 mit einem koaxial zum Schmiermittelkanal 142 verlaufenden Schmiermittelkanal 144 sowie mit radial zum Schmiermittelkanal 144 verlaufenden Schmiermittelkanälen 146 versehen, die sich auch durch den Rotorträger 132 hindurch erstrecken und Austrittsöffnungen 148 aufweisen, die das Schmiermittel auf einer dem Rotor 82 abgewandten Seite des Wellenendes 96 nahe des Lagers 102 in den vom zylindrischen Fortsatz 94 umschlossenen und den Drehzahlsensor 120 aufnehmenden Raum austreten lassen, von welchem ausgehend die Schmierung des Lagers 102 erfolgt.

Daraus folgt, dass der Drehzahlsensor 120 so ausgebildet ist, dass er sowohl in Schmiermittelumgebung als auch gegebenenfalls im von dem Schmiermittel mitgeführten Arbeitsmedium des Kreislaufs 10 störungsfrei und dauerhaft zuverlässig arbeitet.

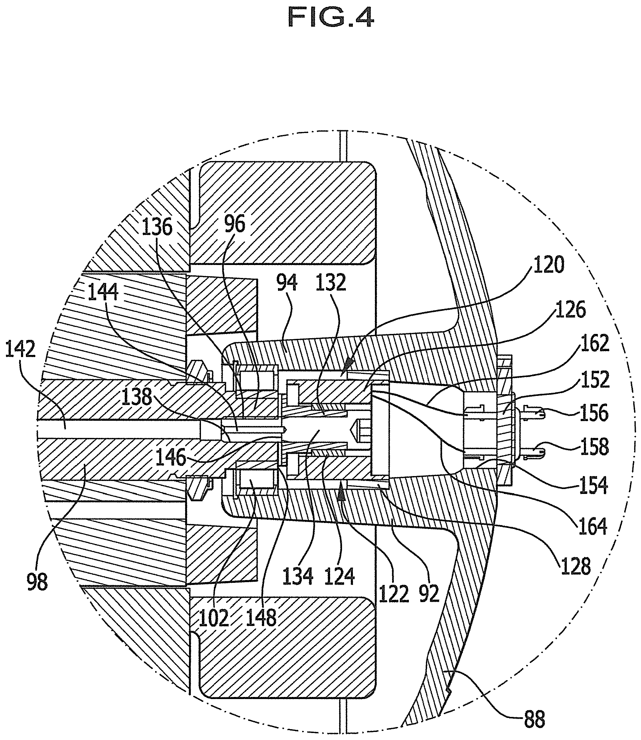

Bei dem ersten dargestellten Ausführungsbeispiels gemäß Fig. 4 erfolgt eine Kontaktierung der Statorwicklungen des Stators 126 über eine Anschlussdurchführung 152, welche beispielsweise in einem Durchbruch 154 des Gehäuseelements 88 zugeordnet ist und diesen verschließt, so dass für den Anschluss der Statorwicklungen des Stators 126 des Drehzahlsensors 120 zwei außerhalb des Generatorgehäuses 86 liegende Kontakte 156 und 158 zur Verfügung stehen, die über die Anschlussdurchführung 152 mit zum Stator 126 und insbesondere dessen Statorwicklungen führenden Leitungen 162 und 164 verbunden sind.

Dadurch, dass der den Drehzahlsensor 120 bildende Sensorgenerator 122 einen Sensorrotor 124 mit permanenter Magnetisierung aufweist, erzeugt der Drehzahlsensor 120 als Sensorsignal eine zur Drehzahl der Generatorwelle 98 proportionale, insbesondere streng proportionale, Spannung.

Vorzugsweise ist dabei der Sensorgenerator 122 mit seinem Sensorrotor 124 und dem Stator 126 so ausgelegt, dass dieser dann, wenn der Generator 34 eine Wechselspannung mit einer Frequenz erzeugt, die einer Netzfrequenz eines vom Generator 34 zu speisenden elektrischen Versorgungsnetzes 210 entspricht, beispielsweise bei 50 Hz oder 60 Hz als Sensorsignal, eine elektrische Spannung erzeugt, die unterhalb von 48 V, jedoch vorzugsweise im Bereich zwischen 30 und 48 V, noch besser im Bereich zwischen 40 und 48 V liegt, um die Drehzahl der Generatorwelle 98 im Bereich der relevanten Netzfrequenz einerseits möglichst präzise, das heißt durch ein Sensorsignal mit einer möglichst hohen Spannung, messen zu können, andererseits aber die Verwendung von Hochspannungskomponenten, die bei Spannungen über 48 V einzusetzen wären, vermieden wird.

Eine besonders vorteilhafte Ausführung sieht vor, dass der Sensorgenerator 122 ein Standardgenerator mit permanentmagnetisiertem Rotor ist.

Insbesondere kann dabei die von dem Sensorgenerator 122 erzeugte Spannung entweder eine AC-Spannung oder eine DC-Spannung sein, die jeweils direkt, das heißt ohne elektrische Umsetzung gemessen werden kann.

Die erfindungsgemäße Lösung eignet sich insbesondere auch zum Einsatz bei bestehenden Expansionsanlagen 30, wenn diese so aufgebaut sind, dass das Gehäuseelement 88 des Generatorgehäuses 86 den Lagerträger 92, insbesondere ausgebildet als zylindrischen Fortsatz 94, aufweist, so dass sich in dem zylindrischen Fortsatz der Sensorgenerator 122 durch einfaches Abnehmen des Gehäuseelements 88 in den Fortsatz 94 auch nachträglich einbauen lässt.

Vorzugsweise lässt sich bei dem dargestellten Ausführungsbeispiel der Generator 34 durch einen Netzschalter 206 auf ein Versorgungsnetz 210 zur Versorgung einer Vielzahl von Verbrauchern aufschalten, wobei das Versorgungsnetz zur Übertragung eines Wechselstroms mit einer definierten stabilen Frequenz ausgelegt ist.

Die Messung der Spannung erfolgt durch die in Fig. 1 dargestellte Steuerung 200 an einem hierzu vorgesehenen Messeingang 202, der mit dem Drehzahlsensor 120, insbesondere den elektrischen Kontakten 156 und 158, über eine entsprechende Leitung verbunden ist.

Die Steuerung 200 steuert ferner über einen Ausgang 204 den Netzschalter 206, der einen elektrischen Ausgang des Generators 34 mit dem als Ganzes mit 210 bezeichneten elektrischen Versorgungsnetz verbindet, so dass der Generator 34 in dieses die erzeugte elektrische Energie einspeisen kann.

Ferner ist vorzugsweise die Steuerung 200 noch so ausgebildet, dass sie über einen Ausgang 212 den Motor 14 des Verdichters 12 ansteuert, über einen Ausgang 214 den Motor 24 der Heißwasserpumpe 22 und über einen Ausgang 216 den Motor 44 der Kaltwasserpumpe 42 ansteuert.

Zusätzlich ist vorgesehen, dass die Steuerung 200 über einen Ausgang 218 eine Ansteuerung eines Schaltventils 222 in einer Bypassleitung 224 zu der Expansionseinrichtung 32 ansteuert.

Darüber hinaus weist die Steuerung 200 noch zweckmäßigerweise einen Eingang 232 auf, über welchen ein Zustand des elektrischen Versorgungsnetzes 210, insbesondere hinsichtlich dessen Frequenz und Spannung erfasst wird.

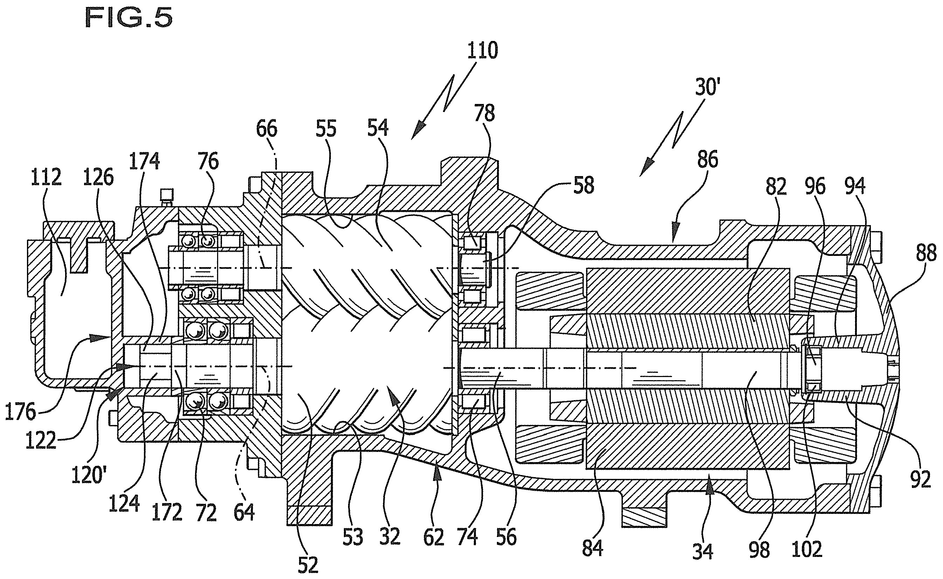

Bei einem zweiten Ausführungsbeispiel der erfindungsgemäßen Expansionsanlage 30' (Fig. 5) sind diejenigen Elemente, die mit denen des ersten Ausführungsbeispiels identisch sind, mit denselben Bezugszeichen versehen, so dass hinsichtlich der Beschreibung derselben auf die Ausführungen zum ersten Ausführungsbeispiel Bezug genommen wird.

Im Gegensatz zum ersten Ausführungsbeispiel ist, wie in Fig. 5 dargestellt, der als elektrischer Generator 122 ausgebildete Drehzahlsensor 120' auf einer der Expanderschraube 52 gegenüberliegenden Seite des Lagersatzes 72 an der Schraubenwelle 56 angeordnet, wobei der Sensorrotor 124 mit einem Wellenende 172 gekoppelt und von diesem getragen ist, während der Stator 126 in einem Fortsatz 174 eines Lagergehäuses 176 stationär aufgenommen ist.

Im Übrigen funktioniert der Sensorgenerator 122 in gleicher Weise wie beim ersten Ausführungsbeispiel und ist in gleicher Weise wie beim ersten Ausführungsbeispiel mit der Steuerung 200 verbunden.

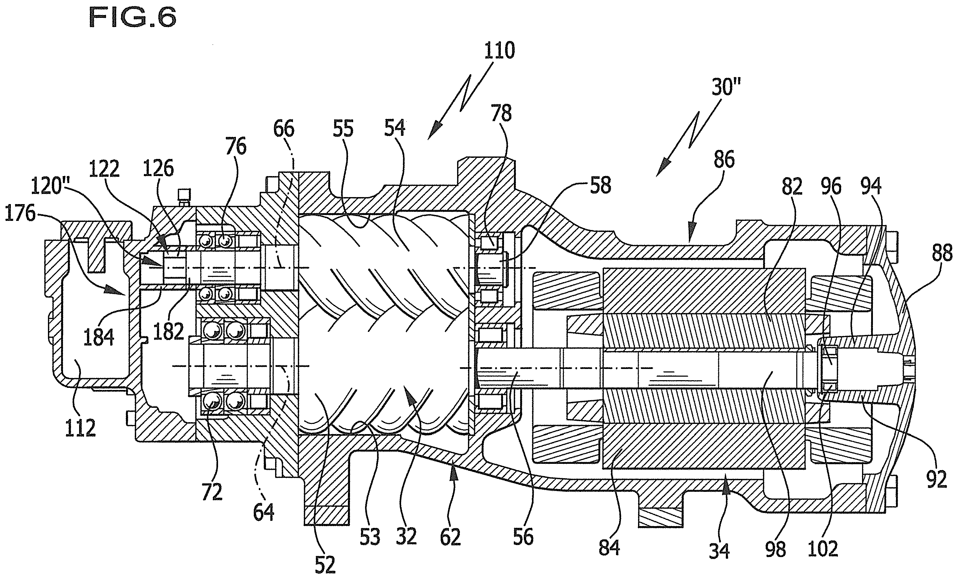

Bei einem dritten Ausführungsbeispiel der erfindungsgemäßen Expansionsanlage 30" (Fig. 6) sind diejenigen Elemente, die mit denen des ersten Ausführungsbeispiels identisch sind, mit denselben Bezugszeichen versehen, so dass hinsichtlich der Beschreibung derselben auf die Ausführungen zum ersten Ausführungsbeispiel Bezug genommen wird.

Im Gegensatz zum ersten Ausführungsbeispiel ist, wie in Fig. 6 dargestellt, der als elektrischer Generator 122 ausgebildete Drehzahlsensor 120" auf einer der Expanderschraube 54 gegenüberliegenden Seite des Lagersatzes 76 an der Schraubenwelle 58 angeordnet, wobei der Sensorrotor 124 mit einem Wellenende 182 der Schraubenwelle 58 gekoppelt und von diesem getragen ist, während der Stator 126 in einem Fortsatz 184 des Lagergehäuses 176 stationär aufgenommen ist.

Da die Expanderschraube 54 mit der den Generator 34 antreibenden Expanderschraube 52 zusammenwirkt ist deren Drehzahl proportional zur Drehzahl des Generators 34, so dass die vom Sensorgenerator 122 erzeugte Spannung ebenfalls für die Drehzahl des Generators 34 repräsentatives Sensorsignal darstellt.

Im Übrigen funktioniert der Sensorgenerator 122 in gleicher Weise wie beim ersten Ausführungsbeispiel und ist in gleicher Weise wie beim ersten Ausführungsbeispiel mit der Steuerung 200 verbunden.

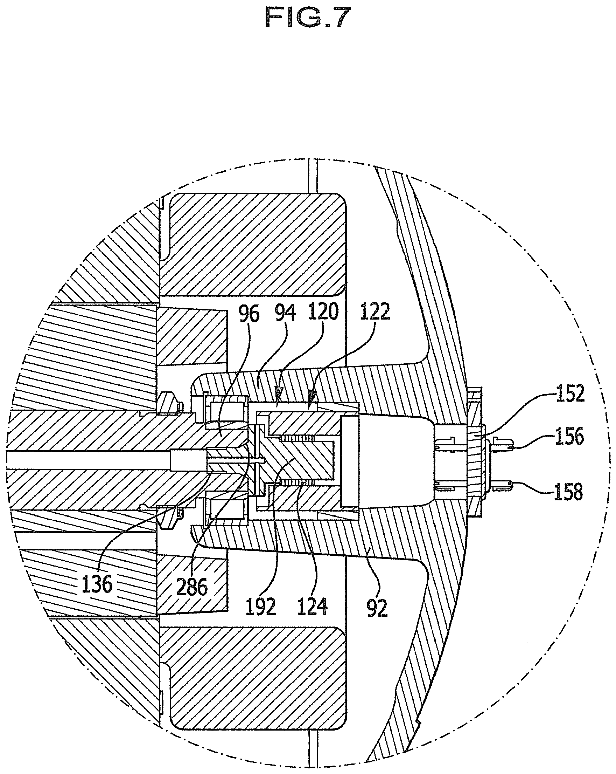

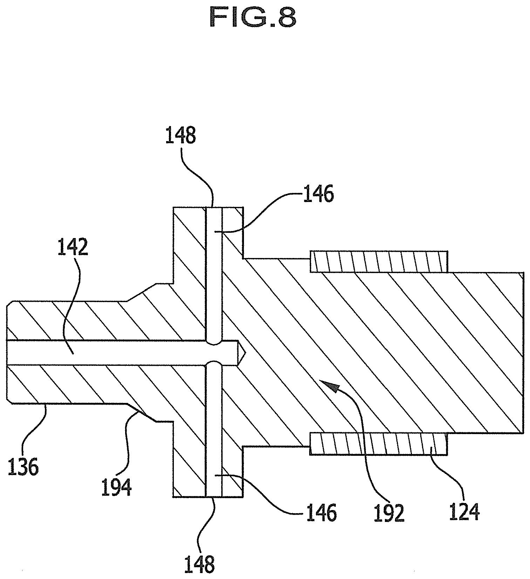

Bei einem vierten Ausführungsbeispiel der erfindungsgemäßen Lösung, dargestellt in Fig. 7 und Fig. 8, ist die Lagerung des Sensorrotors 124 des als Drehzahlsensor 120 arbeitenden Sensorgenerators 122 verbessert und vereinfacht.

Im Übrigen sind bei dem vierten Ausführungsbeispiel diejenigen Teile, die mit denen des ersten Ausführungsbeispiels identisch sind, mit denselben Bezugszeichen versehen, so dass vollinhaltlich auf die voranstehenden Ausführungen zum ersten Ausführungsbeispiel Bezug genommen werden kann.

Bei dem vierten Ausführungsbeispiel sind der Rotorträger 132 und die Zentrierschraube 134 zu einem einzigen, in das Wellenende 96 einschraubbaren Rotorträger 192 zusammengefasst, der einerseits selbst unmittelbar den Sensorrotor 124 trägt und auf den Gewindeabschnitt 136 folgend noch einen Zentrierkonus 194 aufweist, welcher mit einem Zentrierkonus 286 im Wellenende 96 zusammenwirkt, so dass dadurch eine zusätzliche Zentrierung des Rotorträgers 192 relativ zur Drehachse 64 erfolgt, um eine verbesserte Zentrierung des Rotors 124 zu erreichen (Fig. 7, 8).

Insbesondere fällt auch durch das Zusammenfassen des Rotorträgers 132 und der Zentrierschraube 134 das zwischen diesen eventuell auftretende Spiel weg.

Darüber hinaus umfasst der Rotorträger 192 ebenfalls noch den parallel zur Drehachse 64 verlaufenden Schmiermittelkanal 142 und die zwei radial hierzu verlaufende Schmiermittelkanäle 146 mit den Austrittsöffnungen 148, die in gleicher Weise angeordnet sind wie beim ersten Ausführungsbeispiel (Fig. 7, 8).

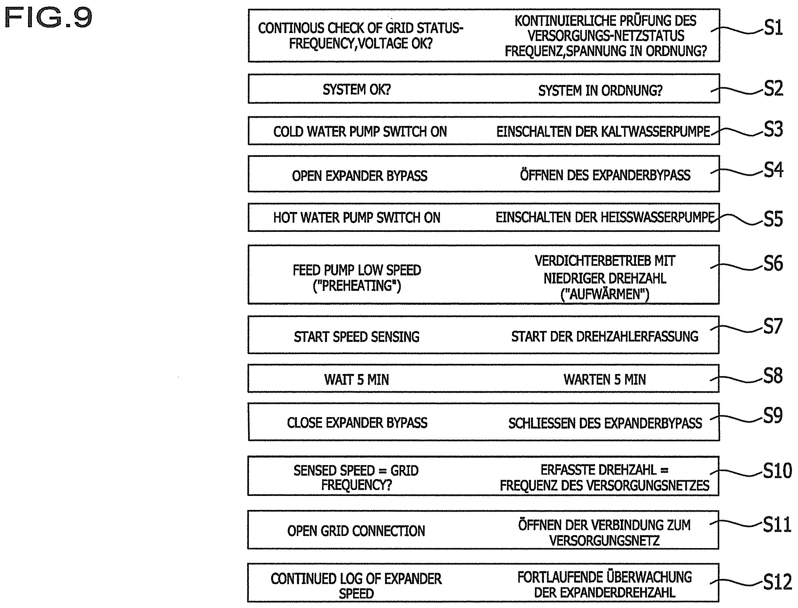

Eine Inbetriebnahme der vorstehend beschriebenen Ausführungsbeispiele der erfindungsgemäßen Expansionsanlagen 30 erfolgt seitens der Steuerung 200 beispielsweise gemäß dem in Fig. 9 dargestellten Ablauf.

In einem ersten Schritt S1 erfolgt eine kontinuierliche Überprüfung des Status des Versorgungsnetzes 210, insbesondere hinsichtlich der Spannung und der Frequenz im elektrischen Versorgungsnetz, erfasst am Eingang 232.

Nachfolgend erfolgt in einem Schritt S2 eine Überprüfung der gesamten Komponenten des Kreislaufs 10 und der Expansionsanlage 30, das heißt insbesondere, der Expansionsanlage 30 mit dem Generator 34 und dem Drehzahlsensor 120.

In einem dritten Schritt S3 erfolgt ein Einschalten des Motors 44 der Kaltwasserpumpe, um den Kaltwasserkreislauf 40 in Betrieb zu nehmen und somit die Kondensation des Arbeitsmediums im Wärmeübertrager 36 sicherzustellen.

In einem weiteren Schritt S4 erfolgt ein Schließen des Schaltventils 222 zur Inbetriebnahme der Bypassleitung 24 für die Expansionsanlage 30, so dass ein wesentlicher Teil des in dem Wärmeübertrager 16 erhitzten Arbeitsmediums nicht durch die Expansionsanlage 30, insbesondere nicht durch die Expansionseinrichtung 32 strömt, sondern durch die Bypassleitung 224.

Beispielsweise ist der Anteil des Arbeitsmediums, der die Expansionseinrichtung 32 durchströmt kleiner 10 % des gesamten aus dem Wärmeübertrager 16 austretenden erhitzten Arbeitsmediums.

In einem weiteren Schritt S5 erfolgt ein Einschalten des Motors 24 der Heißwasserpumpe 22, um den Heißwasserkreislauf 20 in Betrieb zu nehmen und somit den Wärmeübertrager 16 aufzuheizen, so dass in diesem Arbeitsmedium verdampft.

Danach erfolgt im Schritt S6 ein Einschalten des Motors 14 zum Betrieb des Verdichters 12, wobei der Verdichter 12 zunächst mit geringer Leistung arbeitet, um das gesamte System aufzuwärmen.

Im nachfolgenden Schritt S7 beginnt dann die Erfassung der Drehzahl des Generators 34 mittels des Drehzahlsensors 120, um zu erfassen, wie schnell der Generator 34, der in diesem Fall ohne Last arbeitet und nur durch einen geringeren Anteil des Arbeitsmediums angetrieben wird, beschleunigt.

Im nachfolgenden Schritt S8 wird eine bestimmte Zeit abgewartet und weiter das gesamte System aufgewärmt.

Im nachfolgenden Schritt S9 erfolgt ein Öffnen des Schaltventils 222 um die Bypassleitung 224 zu unterbrechen.

Nach Unterbrechung der Bypassleitung 224 nimmt die Drehzahl des Generators 34 relativ schnell zu, was durch den Drehzahlsensor 120 überwacht wird und nach Erkennen einer Drehzahl des Generators 34, bei welcher dieser eine Wechselspannung mit einer Frequenz erzeugt, die nur noch geringfügig von der Frequenz des elektrischen Versorgungsnetzes 210 abweicht im Schritt S10, schließt die Steuerung 200 im Schritt S11 den Netzschalter 206, so dass nunmehr der Generator 24 unter Last am Versorgungsetz 210 läuft und hinsichtlich seiner Drehzahl durch das Versorgungsnetz 210 selbst stabilisiert wird, so dass im nachfolgenden Schritt S12 lediglich noch sicherheitshalber die Drehzahl des Generators 24 mittels des Drehzahlsensors 120 und der Steuerung 200 weiter überwacht wird.

Sollte dabei die Drehzahl des Generators 34 eine Wechselspannung mit einer Frequenz ergeben, die von der Netzfrequenz um mehr als einen vorgegebenen Sollwert abweicht, erfolgt durch die Steuerung 200 ein Regelungseingriff in den Kreislauf 10, beispielsweise mittels des Schaltventils 222 ein Aktivieren der Bypassleitung 224, um die Drehzahl des Generators 34 wieder zu reduzieren oder um gegebenenfalls durch Öffnen des Netzschalters 206 den Generator 34 vom Versorgungsnetz 210 zu trennen.

Bei einem fünften Ausführungseispiel einer erfindungsgemäßen Anlage zur Gewinnung elektrischer Energie aus Wärme, umfassend eine Expansionsanlage gemäß einem der voranstehenden Ausführungsbeispiele, sind diejenigen Elemente, die mit den voranstehenden Elementen identisch sind, mit denselben Bezugszeichen versehen, so dass vollinhaltlich auf die Ausführungen zu diesen Elementen Bezug genommen werden kann.

Im Gegensatz zu den voranstehenden Ausführungsbeispielen ist zu dem Generator 34 noch ein Kondensatorsatz 242 zuschaltbar, der beispielsweise in Dreieckschaltung angeordnete Kondensatoren 244, 246, 248 aufweist, die insbesondere einzelnen Statorwicklungen 254, 256 und 258 des Generators parallel zuschaltbar sind, wobei hierzu noch ein Verbindungsschalter 260 vorgesehen ist, der über einen Ausgang 262 der Steuerung 200' steuerbar ist.

Zusätzlich ist dem Kondensatorsatz 242 noch ein Widerstandsatz 272 zuschaltbar, wobei einzelne Widerstände 274, 276 und 278 des Widerstandsatzes 272 jeweils den Kondensatoren 244, 246, 248 parallel geschaltet werden können.

Hierzu ist ein Widerstandsverbindungsschalter 280 vorgesehen, der mit einem Ausgang 282 der Steuerung 200' verbunden und somit durch die Steuerung 200' steuerbar ist.

Das fünfte Ausführungsbeispiel funktioniert nun so, dass - wie im Zusammenhang mit dem ersten Ausführungsbeispiel beschrieben - mit dem Netzschalter 206 der Generator 34 dann, wenn er Wechselspannung mit einer Frequenz liefert, die der Netzfrequenz des Versorgungsnetzes 210 entspricht, aufgeschaltet werden kann.

Zusätzlich zum Aufschalten des Generators 34 mittels des Netzschalters 206 auf das Versorgungsnetz 210 lässt sich durch den Verbindungsschalter 260 auch der Kondensatorsatz 242 den Statorwicklungen 254, 256 und 258 parallel schalten, wobei der Kondensatorsatz 242 mit seinen Kondensatoren 244, 246 und 248 dazu dient, eine Leistungsanpassung hinsichtlich der Blindund Wirkleistung vorzunehmen.

Dabei wird von der Steuerung 200' der Verbindungsschalter 260 dann geschlossen, wenn der Netzschalter 206 ebenfalls geschlossen wird und somit der Generator 34 elektrische Energie an das Versorgungsnetz 210 abgibt.

Wird jedoch der Netzschalter 206 geöffnet, so bleibt zunächst der Verbindungsschalter 260 weiterhin geschlossen.

Zusätzlich wird der Widerstandsverbindungsschalter 280 von der Steuerung 200' geschlossen, so dass nun die einzelnen Widerstände 274, 276 und 278 den Kondensatoren 244, 246 und 248 parallel geschaltet sind.

Dies führt dazu, dass einerseits an den Statorwicklungen 254, 256 und 258 noch eine Spannung anliegt, und somit bei sich weiter drehendem Rotor 82 des Generators 34 ein Abbremsen des Rotors 82 erfolgt, da die von dem Generator 34 noch erzeugte elektrische Energie in den Widerständen 274, 276 und 278 in Wärme umgesetzt wird und somit ein Abbremsen des Rotors 82 des Generators 34 zur Folge hat.

Sobald der Rotor 82 des Generators 34 stillsteht, wird der Widerstandsverbindungsschalter 280 von der Steuerung 200' geöffnet und außerdem wird der Verbindungsschalter 260 von der Steuerung 200' geöffnet, so dass der Kondensatorsatz 242 ebenfalls den Statorwicklungen 254, 256 und 258 des Generators 34 nicht mehr parallel geschaltet ist.

Bei einem erneuten in Betrieb setzen des Generators 34 erfasst die Steuerung 200' über den Drehzahlsensor 120 die Drehbewegung des Rotors 82, wobei - wie beispielsweise voranstehend beschrieben - durch Inbetriebnahme des Kreislaufs 10 die Drehzahl des Rotors 82 ansteigt und somit auch die Frequenz der vom Generator 34 erzeugten Wechselspannung ansteigt.

Während dieser Phase sind die Statorwicklungen 254, 256 und 258 nicht mit dem Kondensatorsatz 242 verbunden.

Erst wenn ein Aufschalten des Generators 34 seitens der Steuerung 200' mittels des Netzschalters 206 auf das Versorgungsnetz 210 erfolgt, erfolgt wiederum eine Verbindung des Kondensatorsatzes 242 mittels des Verbindungsschalters 260 um ebenfalls - wie bereits vorstehend erwähnt - die Leistungsanpassung vorzunehmen.

Allerdings bleibt nach wie vor der Widerstandverbindungsschalter 280 so lange geöffnet, und somit der Widerstandssatz 272 von dem Kondensatorsatz 242 getrennt, bis wieder ein Öffnen des Netzschalters 206 erfolgt. Erst dann erfolgt wiederum über den Widerstandsverbindungsschalter 280 ein Aufschalten des Widerstandsatzes 272 auf den Kondensatorsatz 242, der den bereits beschriebenen Abbremseffekt des Rotors 82 des Generators 34 bewirkt.

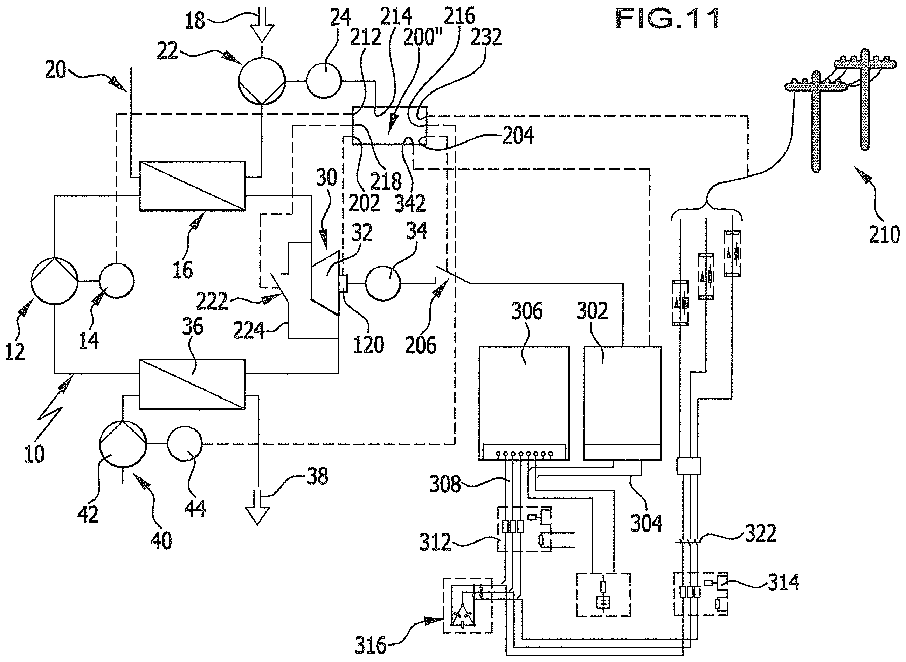

Bei einem sechsten Ausführungsbeispiel einer erfindungsgemäßen Anlage mit einer Expansionsanlage, dargestellt in Fig. 11 wird die von dem Generator 34 erzeugte elektrische Energie über den Netzschalter 206 einer Umrichtereinheit 300 zugeführt. Diese umfasst einen ersten Umrichter 302, welcher den Wechselstrom, insbesondere den dreiphasigen vom Generator 34 erzeugten Wechselstrom, einem Gleichstromzwischenkreis 304 der Umrichtereinheit 300 in Form von Gleichstrom zuführt.

Dieser Gleichstromzwischenkreis 304 ist seinerseits wiederum mit einem zweiten Umrichter 306 der Umrichtereinheit 300 verbunden, welcher den Gleichstrom des Gleichstromzwischenkreises 304 wiederum umrichtet und einem Wechselstromausgangskreis 308 mit der dem Versorgungsnetz 210 entsprechenden Netzfrequenz zuführt.

In dem Wechselstromausgangskreis 308 sind ein erster Induktorsatz 312 und ein zweiter Induktorsatz 314 vorgesehen und zwischen den zwei Induktorsätzen 312 und 314 ist ein Kondensatorsatz 316 vorgesehen, so dass mit den Induktorsätzen 312 und 314 sowie dem Kondensatorsatz 316 eine optimale Anpassung des vom zweiten Umrichter 306 erzeugten Wechselstroms an das Versorgungsnetz 210 möglich ist.

Der Wechselstromausgangskreis 308 ist ferner noch über einen Ausgangsschalter 322 mit dem Versorgungsnetz 210 verbindbar.

Bei diesem sechsten Ausführungsbeispiel ist die Steuerung 200" so ausgebildet, dass diese den Generator 34 mittels des Netzschalters 206 nur dann mit dem ersten Umrichter 302 verbindet, wenn der Generator 34 sich mit einer Mindestdrehzahl dreht, die vom Drehzahlsensor 120 erfasst wird.

Beispielsweise ist die Mindestdrehzahl des Generators 34 so bemessen, dass der erzeugte Wechselstrom eine Generatorfrequenz aufweist, die ungefähr einer Mindestfrequenz entspricht, welche im Bereich von 20 Hz bis 30 Hz liegt.

Ab dieser Mindestfrequenz ist ein Betriebsfrequenzbereich für den ersten Umrichter 302 erreicht, so dass vom ersten Umrichter 302 dann Gleichstrom in den Gleichstromzwischenkreis 304 eingespeist wird.

In diesem Betriebsfrequenzbereich ist somit dann auch der zweite Umrichter 306 in der Lage, einen Wechselstrom im Wechselstromausgangskreis 308 zu erzeugen, der eine Frequenz aufweist, welche der Netzfrequenz des Versorgungsnetzes 210 entspricht.

Die Steuerung 200" ist somit in der Lage, über einen Ausgang 342 den ersten Umrichter 302 so zu steuern, dass dieser ab dem Erreichen der Mindestfrequenz des Wechselstroms den ersten Umrichter 302 so betreibt, dass dessen Umrichterfrequenz wenige Hz, beispielsweise 1 bis 3 HZ, niedriger ist als die Generatorfrequenz, um dem Generator 34 durch Abbremsen desselben Energie zu entziehen und dadurch die vom Generator 34 erzeugte elektrische Energie in den Gleichstromzwischenkreis 304 einzuspeisen.

Im Gegensatz dazu wird der zweite Umrichter 306 stets so betrieben, dass er einen Wechselstrom mit genau der Netzfrequenz des Versorgungsnetzes 210 erzeugt und in den Wechselstromausgangskreis 308 einspeist.

Die Steuerung 200' ist somit in der Lage, den Generator 34 in einem Drehzahlbereich zu betreiben, der zu einem Wechselstrom führt, der in dem Betriebsbereich zwischen der genannten Mindestfrequenz und einer Höchstfrequenz, die Beispielsweise zwischen 60 und 80 Hz liegt, variieren kann, da stets die Möglichkeit besteht, über den ersten Umrichter 302 den erzeugten Wechselstrom in den Gleichstromzwischenkreis 304 einzuspeisen.

Die Steuerung 200" wird dabei insbesondere den Kreisprozess so betreiben, dass am Generator 34 eine möglichst optimale Energieausbeute zur Einspeisung in das Versorgungsnetz 210 zur Verfügung steht.

Sollten im Versorgungsnetz 210 Probleme auftreten, so ist die Steuerung 202' in der Lage, mittels des Ausgangsschalters 322 den zweiten Umrichter 306 vom Netz zu trennen und somit Schaden von diesem abzuwenden.

Desgleichen ist die Steuerung 200" in der Lage, den ersten Umrichter 302 vom Generator 34 zu trennen, sofern dessen Drehzahl zu Generatorfrequenzen des erzeugten Wechselstroms führt, die außerhalb des Betriebsbereichs liegen, der von der Mindestfrequenz bis zu der Höchstfrequenz reicht.

Das sechste Ausführungsbeispiel der erfindungsgemäßen Anlage lässt sich in Abwandlung vom ersten Ausführungsbeispiel so betreiben, dass die Schritte S1 bis S7 gemäß Fig. 9 in gleicher Weise von der Steuerung 200" durchgeführt werden, wie im Zusammenhang mit der Steuerung 200 beschrieben.

Allerdings kann bereits nach einer gemäß Schritt S8 weit kürzeren Betriebsdauer ein Ausführen des Schritts S9 erfolgen und im Schritt S10 bereits bei Erreichen der einer dem Betriebsfrequenzbereich entsprechenden Generatorfrequenz ein Einspeisen der bei der Generatorfrequenz erzeugten elektrischen Energie in das Versorgungsnetz 210 gemäß dem Schritt S10 erfolgen.

Danach erfolgt durch die Steuerung 200" sukzessive ein Steigern der Generatorfrequenz innerhalb des Betriebsfrequenzbereichs, um die Möglichkeit zu haben, noch mehr elektrische Leistung vom Generator 34 in das Versorgungsnetz 210 einzuspeisen.

Hierbei wird die Steuerung 200" einerseits die Abläufe im Kreisprozess so optimieren, dass möglichst viel elektrische Energie am Generator 34 anfällt und in das Versorgungsnetz 210 eingespeist werden kann, wobei stets aufgrund der Sensorsignale des Drehzahlsensors 120 eine Anpassung des ersten Umrichters 302 an die Generatorfrequenz erfolgt, sofern diese im Betriebsfrequenzbereich liegt.

Es ist aber auch möglich durch die Steuerung 200" die Generatorfrequenz nur bis zu einer definierten Frequenz, beispielsweise der Netzfrequenz entsprechenden Betriebsfrequenz, zu steigern und dann bei dieser Frequenz zu halten.

## Patentansprüche

1. Expansionsanlage (30) zur Gewinnung von elektrischer Energie aus Wärme, mittels eines thermodynamischen Kreisprozesses, umfassend eine durch ein expandierendes Arbeitsmedium des thermodynamischen Kreisprozesses betriebene Expansionseinrichtung (32) und einen Generator (34), der durch die Expansionseinrichtung (32) angetrieben ist,
wobei die Expansionsanlage (30) mit einem Drehzahlsensor (120) versehen ist, **dadurch gekennzeichnet, dass** der Drehzahlsensor (120) mit einer sich proportional zu einem Rotor (82) des Generators (34) drehenden Welle (98, 56, 58) der Expansionsanlage (30) gekoppelt ist und als elektrischer Sensorgenerator (122) ausgebildet ist, der ein elektrisches Sensorsignal erzeugt und dass der elektrische Sensorgenerator (122) als Sensorsignal eine elektrische Spannung erzeugt, und dass der Sensorgenerator (122) in einem Gesamtgehäuse der Expansionsanlage (30) angeordnet und in diesem einem organischen Arbeitsmedium und Schmiermittel ausgesetzt ist.

2. Expansionsanlage nach Anspruch 1, **dadurch gekennzeichnet, dass** der Sensorgenerator (122) einen Sensorrotor (124) mit permanenter Magnetisierung aufweist, der mit einem Statorwicklungen aufweisenden Stator (126) zusammenwirkt, wobei bei sich drehendem Sensorrotor (124) an den Statorwicklungen des Stators (126) eine von der Drehzahl des Sensorrotors (124) abhängige Spannung auftritt, welche das Sensorsignal darstellt.

3. Expansionsanlage nach einem der voranstehenden Ansprüche, **dadurch gekennzeichnet, dass** der Sensorrotor (124) zur Realisierung der permanenten Magnetisierung ein Seltene Erden umfassendes Magnetmaterial aufweist.

4. Expansionsanlage nach einem der voranstehenden Ansprüche, **dadurch gekennzeichnet, dass** der Sensorgenerator (122) so ausgelegt ist, dass er bei einer Drehzahl des Generators (34) welche einer Frequenz der erzeugten Wechselspannung entspricht, die im Bereich einer Netzfrequenz eines Versorgungsnetzes liegt, eine Spannung im Bereich zwischen 30 V und 48 V, vorzugsweise zwischen 40 V und 48 V erzeugt.

5. Expansionsanlage nach einem der voranstehenden Ansprüche, **dadurch gekennzeichnet, dass** der Sensorrotor (124) des Sensorgenerators (122) direkt mit einem Wellenende (96, 172, 182) drehfest gekoppelt und von diesem getragen ist.

6. Expansionsanlage nach einem der voranstehenden Ansprüche, **dadurch gekennzeichnet, dass** der Sensorrotor (124) des Sensorgenerators (122) auf einem mit dem Wellenende (96, 172, 182) verbundenen Rotorträger (162, 192) angeordnet ist, dass insbesondere der Rotorträger (162, 192) mittels einer Zentrierschraube (134) mit dem Wellenende (96) verbunden ist, dass insbesondere der Rotorträger (192) mittels eines Zentrierkonus (194) relativ zu dem Wellenende (96) zentriert ist.

7. Expansionsanlage nach einem der voranstehenden Ansprüche, **dadurch gekennzeichnet, dass** das mit dem Sensorrotor (124) des Sensorgenerators (122) gekoppelte und diesen tragende Wellenende (96, 172, 182) von einem Lager (102, 72, 76) zentriert geführt ist, dass insbesondere das Wellenende (96, 172, 182) von dem dieses zentriert führenden Lager (102, 72, 76) maximal einen Abstand aufweist, welcher einem Durchmesser des Wellenendes (96, 172, 182) entspricht.

8. Expansionsanlage nach einem der voranstehenden Ansprüche, **dadurch gekennzeichnet, dass** der Sensorgenerator (122) in einem Gesamtgehäuse (110) der Expansionsanlage (30) angeordnet ist, dass insbesondere der Sensorgenerator (122) in einem Expandergehäuse (62) angeordnet ist, dass insbesondere der Sensorgenerator (122) mit einer Schraubenwelle (56, 58) gekoppelt ist.

9. Expansionsanlage nach einem der voranstehenden Ansprüche, **dadurch gekennzeichnet, dass** der Sensorgenerator (122) in einem Generatorgehäuse (86) angeordnet ist, dass insbesondere der Sensorgenerator (122) mit einer Generatorwelle (98) gekoppelt ist, dass insbesondere der Sensorrotor (124) des Sensorgenerators (122) mit einem Wellenende (96) der Generatorwelle gekoppelt und von diesem getragen ist.

10. Expansionsanlage nach einem der voranstehenden Ansprüche, **dadurch gekennzeichnet, dass** der Stator (136) des Sensorgenerators (120) an einem Gehäuseelement (88), insbesondere einem vom Gesamtgehäuse (110) demontierbaren Gehäuseelement (88), gehalten ist, dass insbesondere das Gehäuseelement (88) mit einer elektrischen Anschlussdurchführung (152) versehen ist.

11. Expansionsanlage nach einem der voranstehenden Ansprüche, **dadurch gekennzeichnet, dass** der Stator (126) des Sensorgenerators (122) an einem Fortsatz (94, 174, 184) eines Gesamtgehäuses (110) der Expansionsanlage (30) stationär gehalten ist.

12. Expansionsanlage nach einem der voranstehenden Ansprüche, **dadurch gekennzeichnet, dass** die Expansionseinrichtung (32) mindestens eine durch das expandierende Arbeitsmedium angetriebene Expanderschraube (52, 54) aufweist, mittels welcher ein Antrieb des Generators (34) erfolgt.

13. Anlage zur Gewinnung elektrischer Energie aus Wärme, insbesondere aus Abwärme, umfassend eine in einem thermodynamischen Kreisprozess betriebene Expansionsanlage (30), **dadurch gekennzeichnet, dass** die Expansionsanlage (30) nach einem der Ansprüche 1 bis 12 ausgebildet ist, dass insbesondere diese Anlage eine einen Kreislauf (10) des Kreisprozesses sowie einen Netzschalter (206) zum Verbinden des Generators (34) mit einem elektrischen Versorgungsnetz (210) steuernde Steuerung (200) aufweist, dass insbesondere die Steuerung (200) die vom Sensorgenerator (122) erzeugte Spannung erfasst, aus dieser einen Wert für die Drehzahl des Generators (34) ermittelt und den Generator (34) durch Schließen des Netzschalters (206) mit dem elektrischen Versorgungsnetz (210) dann verbindet, wenn die Drehzahl des Generators (34) zu einer Wechselspannung führt, deren Frequenz einer Netzfrequenz des elektrischen Versorgungsnetzes (210) entspricht.

14. Anlage nach Anspruch 13, **dadurch gekennzeichnet, dass** die Steuerung (200) die Drehzahl des mit dem Versorgungsnetz (210) gekoppelten Generators (34) überwacht und dann, wenn die Frequenz der erzeugten Wechselspannung von der Netzfrequenz abweicht, in den Kreislauf (10) im Sinne einer Anpassung der Drehzahl des Generators (34) steuernd eingreift, dass insbesondere die Steuerung (200) die Drehzahl des mit dem Versorgungsnetz (210) gekoppelten Generators (34) überwacht und dann, wenn die Differenz zwischen der Frequenz der vom Generator (34) erzeugten Wechselspannung und der Netzfrequenz des Versorgungsnetzes (210) einen Schwellwert überschreitet, durch Öffnen des Netzschalters (206) den Generator (34) von dem elektrischen Versorgungsnetz (210) trennt.

15. Anlage nach einem der Ansprüche 13 oder 14, **dadurch gekennzeichnet, dass** der Generator (34) mittels einer Umrichtereinheit (300) mit dem elektrischen Versorgungsnetz (210) gekoppelt ist, dass insbesondere die Umrichtereinheit (300) die von dem Generator (34) mit einer Generatorfrequenz erzeugte elektrische Energie in elektrische Energie mit der Netzfrequenz des Versorgungsnetzes (210) umsetzt und in dieses einspeist, dass insbesondere die Umrichtereinheit (300) die elektrische Energie des Generators (34) dann in elektrische Energie zur Einspeisung in das Versorgungsnetz (210) umsetzt, wenn die Generatorfrequenz in einem Betriebsfrequenzbereich liegt, der sich von einer Mindestfrequenz bis zu einer Hochfrequenz erstreckt, dass insbesondere mit der Umrichtereinheit (300) die Generatorfrequenz für den Generator (34) vorgebbar ist, dass insbesondere die Generatorfrequenz durch Zusammenwirken der Steuerung (200") mit der Umrichtereinheit (300) an die vom Kreisprozess am Generator (34) freigesetzte Leistung anpassbar ist, dass insbesondere die Steuerung (200) den Generator (34) dann von der Umrichtereinheit (300) abkoppelt, wenn die Generatorfrequenz außerhalb des Betriebsfrequenzbereichs liegt, dass insbesondere die Umrichtereinheit (300) einen Gleichstromzwischenkreis (304) zur Erzeugung der elektrischen Energie bei der Netzfrequenz aufweist, dass insbesondere die Umrichtereinheit (300) einen mit dem Generator (34) verbindbaren ersten Umrichter (302) zur Speisung des Gleichstromzwischenkreises (304) aufweist.

## Claims

1. An expansion installation (30) for obtaining electrical energy from heat by means of a thermodynamic circulation procedure, comprising an expansion device (32), which is operated by an expanding working medium of the thermodynamic circulation procedure, and a generator (34) driven by the expansion device (32),
wherein the expansion installation (30) is provided with a rotational speed sensor (120), **characterized in that** the rotational speed sensor (120) is coupled to a shaft (98, 56, 58) of the expansion installation (30) that rotates proportionally to a rotor (82) of the generator (34), and which takes the form of an electrical sensor generator (122) that generates an electrical sensor signal **in that** as a sensor signal the electrical sensor generator (122) generates an electrical voltage, and **in that** the sensor generator (122) is arranged in an overall casing of the expansion installation (30) and is exposed therein to an organic working medium and lubricant.

2. The expansion installation as claimed in claim 1, **characterized in that** the sensor generator (122) has a permanently magnetized sensor rotor (124) that cooperates with a stator (126) having stator windings, wherein, during rotation of the sensor rotor (124), there is produced at the stator windings of the stator (126) a voltage that is dependent on the speed of the sensor rotor (124) and represents the sensor signal.

3. The expansion installation as claimed in one of the preceding claims, **characterized in that**, for the purpose of achieving the permanent magnetization, the sensor rotor (124) has a magnet material comprising rare earth elements.

4. The expansion installation as claimed in one of the preceding claims, **characterized in that** the sensor generator (122) is configured such that, at a speed of rotation of the generator (34) that corresponds to a frequency of the generated AC voltage lying in the range of a grid frequency of a grid, it generates a voltage in the range between 30 V and 48 V, preferably between 40 V and 48 V.

5. The expansion installation as claimed in one of the preceding claims, **characterized in that** the sensor rotor (124) of the sensor generator (122) is coupled directly and non-rotatably to a shaft end (96, 172, 182) and is carried by it.

6. The expansion installation as claimed in one of the preceding claims, **characterized in that** the sensor rotor (124) of the sensor generator (122) is arranged on a rotor carrier (162, 192) that is connected to the shaft end (96, 172, 182), **in that** in particular the rotor carrier (162, 192) is connected to the shaft end (96) by means of a centering screw (134), **in that** in particular the rotor carrier (192) is centered in relation to the shaft end (96) by means of a centering cone (194).

7. The expansion installation as claimed in one of the preceding claims, **characterized in that** the shaft end (96, 172, 182) that is coupled to and carries the sensor rotor (124) of the sensor generator (122) is guided in centered manner by a bearing (102, 72, 76), **in that** in particular the shaft end (96, 172, 182) is at a spacing from the bearing (102, 72, 76) that guides it in centered manner at most by an amount that corresponds to a diameter of the shaft end (96, 172, 182).

8. The expansion installation as claimed in one of the preceding claims, **characterized in that** the sensor generator (122) is arranged in an overall casing (110) of the expansion installation (30), **in that** in particular the sensor generator (122) is arranged in an expander casing (62), **in that** in particular the sensor generator (122) is coupled to a screw shaft (56, 58).

9. The expansion installation as claimed in one of the preceding claims, **characterized in that** the sensor generator (122) is arranged in a generator casing (86), **in that** in particular the sensor generator (122) is coupled to a generator shaft (98), **in that** in particular the sensor rotor (124) of the sensor generator (122) is coupled to a shaft end (96) of the generator shaft and carried by it.

10. The expansion installation as claimed in one of the preceding claims, **characterized in that** the stator (136) of the sensor generator (120) is held on a casing element (88), in particular a casing element (88) that is demountable from the overall casing (110), **in that** in particular the casing element (88) is provided with an electrical terminal feedthrough (152).

11. The expansion installation as claimed in one of the preceding claims, **characterized in that** the stator (126) of the sensor generator (122) is held stationary on a projection (94, 174, 184) of an overall casing (110) of the expansion installation (30).

12. The expansion installation as claimed in one of the preceding claims, **characterized in that** the expansion device (32) has at least one expander screw (52, 54), which is driven by the expanding working medium and drives the generator (34).

13. An installation for obtaining electrical energy from heat, in particular from waste heat, comprising an expansion installation (30) that is operated in a thermodynamic circulation procedure, **characterized in that** the expansion installation (30) takes a form as claimed in one of claims 1 to 12, **in that** in particular this installation has a controller (200), which controls a circuit (10) of the circulation procedure and a power switch (206) for connecting the generator (34) to an electrical grid (210), **in that** in particular the controller (200) detects the voltage generated by the sensor generator (122), determines therefrom a value of the speed of rotation of the generator (34) and, by closing the power switch (206), connects the generator (34) to the electrical grid (210) when the speed of rotation of the generator (34) gives an AC voltage of which the frequency corresponds to a grid frequency of the electrical grid (210).

14. The installation as claimed in claim 13, **characterized in that** the controller (200) monitors the speed of rotation of the generator (34) that is coupled to the grid (210) and, if the frequency of the generated AC voltage deviates from the grid frequency, intervenes in the circuit (10) in controlling manner, adapting the speed of the generator (34), **in that** in particular the controller (200) monitors the speed of rotation of the generator (34) that is coupled to the grid (210) and, if the difference between the frequency of the AC voltage generated by the generator (34) and the grid frequency of the grid (210) exceeds a threshold, isolates the generator (34) from the electrical grid (210) by opening the power switch (206).

15. The installation as claimed in claim 13 or 14, **characterized in that** the generator (34) is coupled to the electrical grid (210) by means of a converter unit (300), **in that** in particular the converter unit (300) converts the electrical energy that is generated by the generator (34) at a generator frequency into electrical energy having the grid frequency of the grid (210), and feeds it to the grid (210), **in that** in particular the converter unit (300) converts the electrical energy of the generator (34) into electrical energy for feeding to the grid (210) if the generator frequency lies in an operating frequency range that extends from a minimum frequency to a high frequency, **in that** in particular the converter unit (300) is configured to predetermine the generator frequency of the generator (34), **in that** in particular, as a result of cooperation between the controller (200") and the converter unit (300), the generator frequency is adaptable to the output released by the circulation procedure at the generator (34), **in that** in particular the controller (200) uncouples the generator (34) from the converter unit (300) if the generator frequency lies outside the operating frequency range, **in that** in particular the converter unit (300) has a DC link circuit (304) for generating electrical energy at the grid frequency, **in that** in particular the converter unit (300) has a first converter (302), which is connectable to the generator (34), for feeding the DC link circuit (304).

## Revendications

1. Installation d'expansion (30) pour obtenir de l'énergie électrique à partir de chaleur, au moyen d'un cycle thermodynamique, comprenant un dispositif d'expansion (32) actionné par un milieu de travail en expansion du cycle thermodynamique et un générateur (34) qui est entraîné par le dispositif d'expansion (32),
dans laquelle l'installation d'expansion (30) est pourvue d'un capteur de vitesse de rotation (120), **caractérisée en ce que** le capteur de vitesse de rotation (120) est couplé à un arbre (98, 56, 58) de l'installation d'expansion (30) tournant proportionnellement à un rotor (82) du générateur (34) et est réalisée en tant que générateur de capteur électrique (122) qui génère un signal de capteur électrique et que le générateur de capteur électrique (122) génère une tension électrique en tant que signal de capteur, et que le générateur de capteur (122) est disposé dans un carter intégral de l'installation d'expansion (30) et y est exposé à un milieu de travail organique et à un lubrifiant.

2. Installation d'expansion selon la revendication 1, **caractérisée en ce que** le générateur de capteur (122) présente un rotor de capteur (124) à aimantation permanente qui interagit avec un stator (126) présentant des enroulements de stator, dans laquelle une tension dépendante de la vitesse de rotation du rotor de capteur (124), laquelle représente le signal de capteur, apparaît aux enroulements de stator du stator (126) lorsque le rotor de capteur (124) est en rotation.

3. Installation d'expansion selon l'une quelconque des revendications précédentes, **caractérisée en ce que** le rotor de capteur (124) présente un matériau magnétique comprenant une terre rare pour réaliser la magnétisation permanente.

4. Installation d'expansion selon l'une quelconque des revendications précédentes, **caractérisée en ce que** le générateur de capteur (122) est conçu de sorte que, à une vitesse de rotation du générateur (34), laquelle correspond à une fréquence de la tension alternative générée qui se situe dans la plage d'une fréquence réseau d'un réseau d'alimentation, il génère une tension dans la plage comprise entre 30 V et 48 V, de préférence entre 40 V et 48 V.

5. Installation d'expansion selon l'une quelconque des revendications précédentes, **caractérisée en ce que** le rotor de capteur (124) du générateur de capteur (122) est couplé directement à une extrémité d'arbre (96, 172, 182) de manière solidaire en rotation et porté par celle-ci.

6. Installation d'expansion selon l'une quelconque des revendications précédentes, **caractérisée en ce que** le rotor de capteur (124) du générateur de capteur (122) est disposé sur un support de rotor (162, 192) relié à l'extrémité d'arbre (96, 172, 182), qu'en particulier le support de rotor (162, 192) est relié à l'extrémité d'arbre (96) au moyen d'une vis de centrage (134), qu'en particulier le support de rotor (192) est centré par rapport à l'extrémité d'arbre (96) au moyen d'un cône de centrage (194).

7. Installation d'expansion selon l'une quelconque des revendications précédentes, **caractérisée en ce que** l'extrémité d'arbre (96, 172, 182) couplée au rotor de capteur (124) du générateur de capteur (122) et portant celui-ci est guidée de manière centrée par un palier (102, 72, 76) de sorte qu'en particulier l'extrémité d'arbre (96, 172, 182) présente à partir du palier (102, 72, 76) guidant celle-ci de manière centrée une distance maximale, laquelle correspond à un diamètre de l'extrémité d'arbre (96, 172, 182).

8. Installation d'expansion selon l'une quelconque des revendications précédentes, **caractérisée en ce que** le générateur de capteur (122) est disposé dans un carter intégral (110) de l'installation d'expansion (30), qu'en particulier le générateur de capteur (122) est disposé dans un carter d'expandeur (62), qu'en particulier le générateur de capteur (122) est couplé à un arbre à vis (56, 58).

9. Installation d'expansion selon l'une quelconque des revendications précédentes, **caractérisée en ce que** le générateur de capteur (122) est disposé dans un carter de générateur (86), qu'en particulier le générateur de capteur (122) est couplé à un arbre de générateur (98), qu'en particulier le rotor de capteur (124) du générateur de capteur (122) est couplé à une extrémité d'arbre (96) de l'arbre de générateur et porté par celle-ci.

10. Installation d'expansion selon l'une quelconque des revendications précédentes, **caractérisée en ce que** le stator (136) du générateur de capteur (120) est maintenu sur un élément de carter (88), en particulier un élément de carter (88) démontable du carter intégral (110), qu'en particulier l'élément de carter (88) est pourvu d'un passage de raccordement électrique (152).

11. Installation d'expansion selon l'une quelconque des revendications précédentes, **caractérisée en ce que** le stator (126) du générateur de capteur (122) est maintenu fixe sur un prolongement (94, 174, 184) d'un carter intégral (110) de l'installation d'expansion (30).

12. Installation d'expansion selon l'une quelconque des revendications précédentes, **caractérisée en ce que** le dispositif d'expansion (32) présente au moins une vis d'expansion (52, 54) entraînée par le milieu de travail en expansion, au moyen de laquelle un entraînement du générateur (34) est effectué.

13. Installation pour obtenir de l'énergie électrique à partir de chaleur, en particulier à partir de chaleur résiduelle, comprenant une installation d'expansion (30) fonctionnant dans un cycle thermodynamique, **caractérisée en ce que** l'installation d'expansion (30) est réalisée selon l'une quelconque des revendications 1 à 12, qu'en particulier cette installation présente une commande (200) commandant un circuit (10) du cycle ainsi qu'un interrupteur d'alimentation (206) pour relier le générateur (34) à un réseau d'alimentation électrique (210), qu'en particulier la commande (200) détecte la tension générée par le générateur de capteur (122), détermine à partir de celle-ci une valeur pour la vitesse de rotation du générateur (34) et relie alors le générateur (34) au réseau d'alimentation électrique (210) en fermant l'interrupteur d'alimentation (206) lorsque la vitesse de rotation du générateur (34) entraîne une tension alternative dont la fréquence correspond à une fréquence de réseau du réseau d'alimentation électrique (210).

14. Installation selon la revendication 13, **caractérisée en ce que** la commande (200) surveille la vitesse de rotation du générateur (34) couplé au réseau d'alimentation (210) et intervient ensuite, lorsque la fréquence de la tension alternative générée diffère de la fréquence de réseau, dans le circuit (10) en commande dans le sens d'une adaptation de la vitesse de rotation du générateur (34), que la commande (200) surveille en particulier la vitesse de rotation du générateur (34) couplé au réseau d'alimentation (210) et ensuite, si la différence entre la fréquence de la tension alternative générée par le générateur (34) et la fréquence de réseau du réseau d'alimentation (210) dépasse une valeur seuil, déconnecte le générateur (34) du réseau d'alimentation électrique (210) par ouverture de l'interrupteur d'alimentation (206).

15. Installation selon l'une quelconque des revendications 13 ou 14, **caractérisée en ce que** le générateur (34) est couplé au réseau d'alimentation électrique (210) au moyen d'une unité de convertisseur (300), qu'en particulier l'unité de convertisseur (300) convertit l'énergie électrique générée par le générateur (34) à une fréquence de générateur en énergie électrique à la fréquence de réseau du réseau d'alimentation (210) et l'injecte dans celui-ci, qu'en particulier l'unité de convertisseur (300) convertit ensuite l'énergie électrique du générateur (34) en énergie électrique à injecter dans le réseau d'alimentation (210) lorsque la fréquence de générateur se situe dans une plage de fréquence de fonctionnement qui s'étend d'une fréquence minimale à une haute fréquence, qu'en particulier la fréquence de générateur pour le générateur (34) peut être prédéterminée avec l'unité de convertisseur (300), qu'en particulier la fréquence de générateur par coopération de la commande (200") avec l'unité de convertisseur (300) peut être adaptée à la puissance libérée par le cycle sur le générateur (34), qu'en particulier la commande (200) découple le générateur (34) de l'unité de convertisseur (300) lorsque la fréquence de générateur est en dehors de la plage de fréquence de fonctionnement, qu'en particulier l'unité de convertisseur (300) présente un circuit intermédiaire à courant continu (304) pour la génération de l'énergie électrique à la fréquence de réseau, qu'en particulier l'unité de convertisseur (300) présente un premier convertisseur (302) pouvant être relié au générateur (34) pour l'alimentation du circuit intermédiaire à courant continu (304).
